(19)

Europäisches
Patentamt
European
Patent Office
Office européen
des brevets

(11) **EP 1 748 365 A1**

(12) **EUROPEAN PATENT APPLICATION**

(43) Date of publication:
**31.01.2007 Bulletin 2007/05**

(51) Int Cl.:
*G06F 17/21* *(2006.01)*     *G06F 17/24* *(2006.01)*

(21) Application number: **05106902.9**

(22) Date of filing: **27.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Hewlett-Packard Development Company, L.P.**
**Houston, TX 77070 (US)**

(72) Inventors:
• **Abad Peiro, José**
 **08174 Sant Cugat del Valles, Barcelona (ES)**
• **Yacoub, Sherif**
 **08174 Sant Cugat del Valles, Barcelona (ES)**

(74) Representative: **Leadbetter, Benedict**
**Hewlett-Packard Espanola, S.L.,**
**Legal Department,**
**Avda Graells, 501**
**08190 Sant Cugat del Vallès (ES)**

(54) **Document Template Generation**

(57)     A method of generating a document template comprising: analysing a document (16) by: extracting layout information from the document (6), the layout information comprising one or more document zones and the position of the zones (112) on a page or pages of the document; determining properties of each of the one or more zones (112); and generating a semantic label (113) for each zone (112) according to the properties determined for that zone (112); and generating a template, the template comprising the layout information and the semantic labels (112).

Fig. 2

EP 1 748 365 A1

**Description**

**Field of Invention**

This invention relates to document template generation.

**Background of the Invention**

Templates are commonly used for workflows and printing system dealing with variable data printing and form automation. Variable data printing (VDP) is a type of printing in which documents are created by populating a template from a combination of variable text and images taken from records in a database.

Template generation is a complex and time-consuming process involving high levels of human interaction. A typical workflow for template generation will start from a set of base documents created by a team of graphic designers, these documents will form the creative content of the finished printed document. The base documents are then transformed into one or more variable data printing templates (typically by another team, e.g. of engineers). Early transformations may be necessary to adapt the graphic material in the base document to be compatible with the tools used by engineering teams. Typically tools such as Adobe Acrobat PDF and Quark software tools will be used and it will be necessary to convert the base documents into these formats. Such conversions would not be necessary if the graphic designers use the same tools to generate the base documents as the tools used to create the templates. However, restricting the tools available to the graphic designers may inhibit their creativity.

**Summary of the Invention**

A first aspect of the invention provides a computer-implemented method of generating a document template comprising analysing a document by: extracting layout information from the document, the layout information comprising one or more document zones and the position of the zones on a page or pages of the document; determining properties of each of the one or more zones; generating semantic labels for each zone according to the properties determined for that zone; and generating a template, the template comprising the layout information and the semantic labels.

A template is a page structure defined through the position and semantics of zones and groups of zones on the page.

For the purposes of this specification the term "semantic label" is taken to mean a label that indicates a zone classification. A zone type is referred to so as to distinguish between graphics, tables and text zones. Within these types of zones the classification can be refined by the use of semantics and relevance, e.g., semantics can be title or body, and relevance can be advertisement or article. A title is still a title whether a text zone is tagged as advertisement or is part of an article.

A semantic label may be one of a group of different types of semantic label. There may be at least three, at least four, at least five, at least six, or at least seven different types of semantic label.

A semantic label may denote that the zone is one of a non-exhaustive group that includes: a title, a sub-title, a header, a footer, page number, body text, and caption. The examples of semantic labels given are those that may be useful for the processing of complex documents such as magazines, but other classifications targeted to specific document types, e.g., legal documents with disclaimers, claims, etc. can be added by configuring the rules accordingly.

This invention allows for a system to be configured in which templates can be automatically generated from paper samples or other physical media, that is without human intervention other than perhaps quality and assurance checks and perhaps fine tuning (that is to say whilst a template is generated automatically, there may be the provision for a human to modify it or override certain parts of the design). Generally, the paper samples are scanned so as to produce electronic documents that are then analysed according to the invention. Alternatively, documents in electronic format may already be accessible to the system so that scanning is not required.

In an embodiment of the invention the template generated for the document is matched against a plurality of predefined templates and the document is classified according to which of predefined templates best matches the document template.

Although the number of possible layouts found in paper documents, or indeed in electronic documents (such as those viewable on the World Wide Web), could be considered unlimited, at least one embodiment of the invention recognises the fact that the number of document layouts that are actually used is actually relatively small, and so automatic document template generation is actually possible, despite the apparent hopelessness of an infinite number of document layouts being potentially available. There may be many reasons why a limited number of layouts are used, for example the legibility of the final document will constrain the layouts that can be used. Additionally, the number of possible layouts when considered with semantic labels is further limited. For example, a particular layout (geometric arrangement of zones) may be generally acceptable but when the zones are populated with content that has particular semantics then the appearance of the document may not be of an acceptable quality.

An embodiment of the invention comprises populating the zones of the template with text and/or images stored in a memory, or memories, to generate a product document. The product document may be a printed document and/or an electronic document. The product document may a web page. The product document may be an electronic digital version of a paper document, electronic document, or webpage, or the like (e.g. the product document may be held in electronic memory).

The properties determined for the one or more zones may comprises at least one: (i) the presence of text; (ii) the presence of content that matches the content of a lexicon; (iii) font type; (iv) font style; (v) font size; (vi) the amount of text; (vii) the presence of graphics; (viii) zone size; (ix) position of a zone in relation to the page; (x) proximity of a zone to other zones; or (xi) any combination of (i) to (x). This list of properties is not exhaustive.

The semantic label assigned to a zone can be determined by a rule that sets out one or more criteria for the properties of the zone.

In an embodiment of the invention the analysis is applied to a plurality of documents to produce a plurality of respective document templates and one or more of the rules are changed to produce updated rules as more documents are processed by the method. This allows one or more of the labels of a previously generated document template to be replaced, or augmented, with different labels generated according to the updated rules so as to produce an updated template.

A second aspect of the invention provides an apparatus for generating a template comprising a processor adapted to: extract layout information from an electronic document, the layout information comprising one or more document zones and the position of the zones on a page or pages of the document; determine properties of each of the one or more zones; generate a semantic label for each zone according to the properties determined for that zone; and generate a template, the template comprising the layout information and the semantic labels.

The apparatus may comprise a scanner for scanning a printed document to obtain the electronic document. The apparatus may comprise a display for displaying the template.

The apparatus may comprise a memory containing text and/or images and the apparatus being configured such that the template can be populated by text and/or images from the memory to generate a product document. The apparatus may also comprise a printer for printing the product document.

A third aspect of the invention provides software which when run on a processor is adapted to extract layout information from an electronic document, the layout information comprising one or more document zones and the position of the zones on a page or pages of the document; determine properties for each of the one or more zones; generate semantic labels for each zone according to the properties determined for that zone; and generate a template, the template comprising the layout information and the semantic labels.

A fourth aspect of the invention provides a method of workflow processing for producing a document template comprising automatically generating a putative, proposed, document template using a computer programmed with a set of rules which analyse a document and automatically allocate content of the document to zones and which automatically allocate semantic labels to the zones; and manually checking the automatically generated document template and either accept it unchanged or make user-input modifications to the putative document template before accepting the user-modified document template as the final document template.

The term "automatic" should be understood to mean without human intervention.

**Brief Description of the Drawings**

Embodiments of the invention will now be described, by way of example only, with reference to the accompanying drawings, of which;

Figure 1 schematically illustrates a document analysis system according to an embodiment of the invention;

Figure 2 schematically illustrates software components for use on the system of Figure 1;

Figure 3 is a flow diagram illustrating processing for document analysis in an embodiment of the invention;

Figure 4 schematically illustrates a first example of a document page for use with an embodiment of the invention;

Figure 5 schematically illustrates the document page of Figure 4 segmented into zones by an embodiment of the invention;

Figure 6 schematically illustrates layout information for the document of Figure 4;

**Figure 7** schematically illustrates a document template for the document page illustrated in Figure 4, comprising layout information and semantic labels associated to the zones in the layout information, the document page being produced by an embodiment of the invention;

**Figure 8** schematically illustrates a second example of a document page for use with an embodiment of the invention;

**Figure 9** schematically illustrates the document page of Figure 8 segmented into zones by an embodiment of the invention;

**Figure 10** schematically illustrates an embodiment of the invention applied to variable data printing;

**Figure 11** schematically illustrates a sheet of prior art Anoto digital paper; and

**Figure 12** schematically illustrates an existing prior art Anoto-type digital pen.

**Detailed Description**

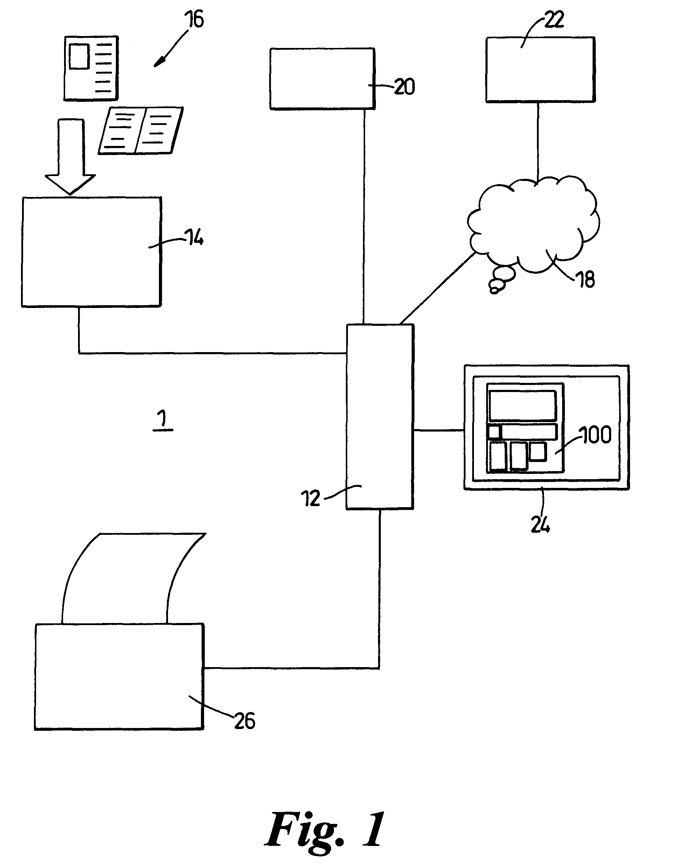

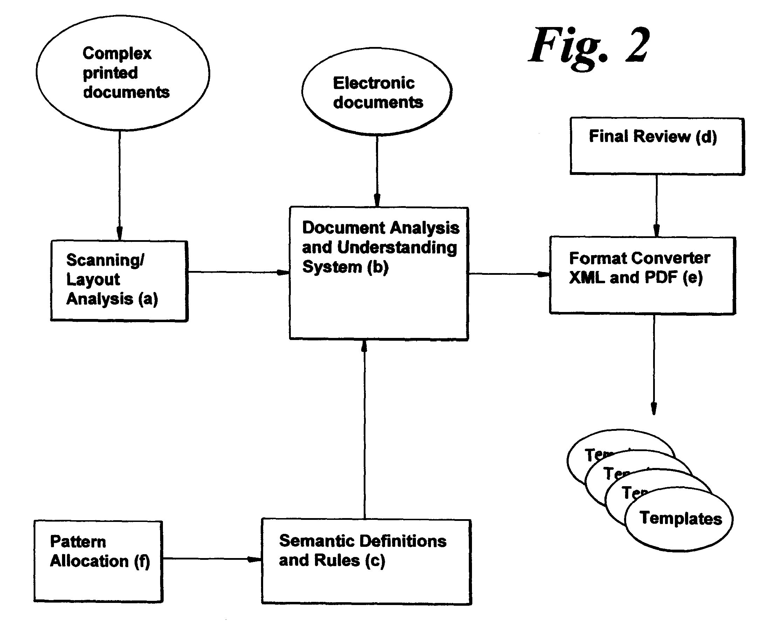

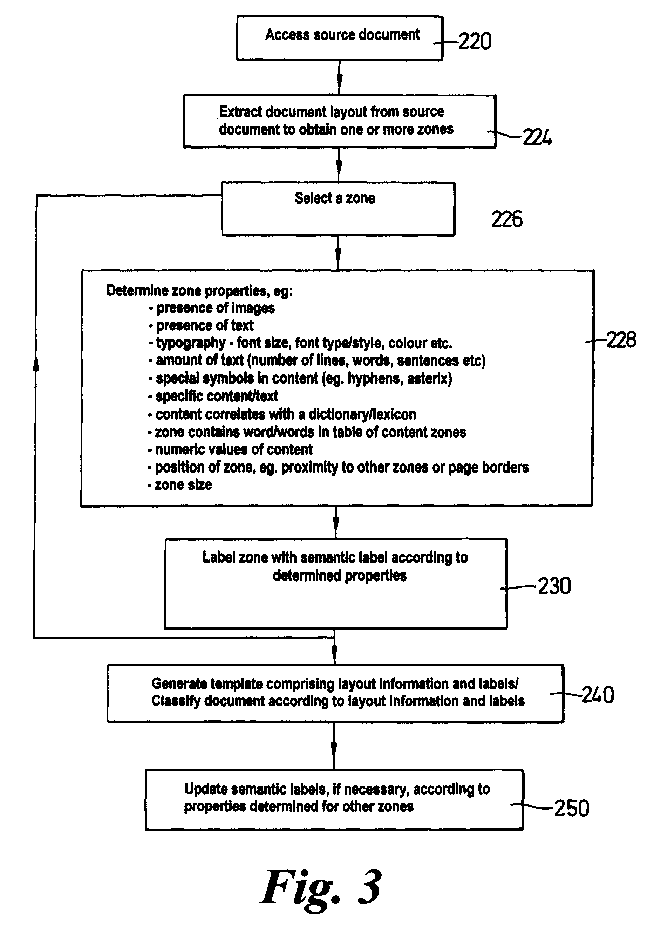

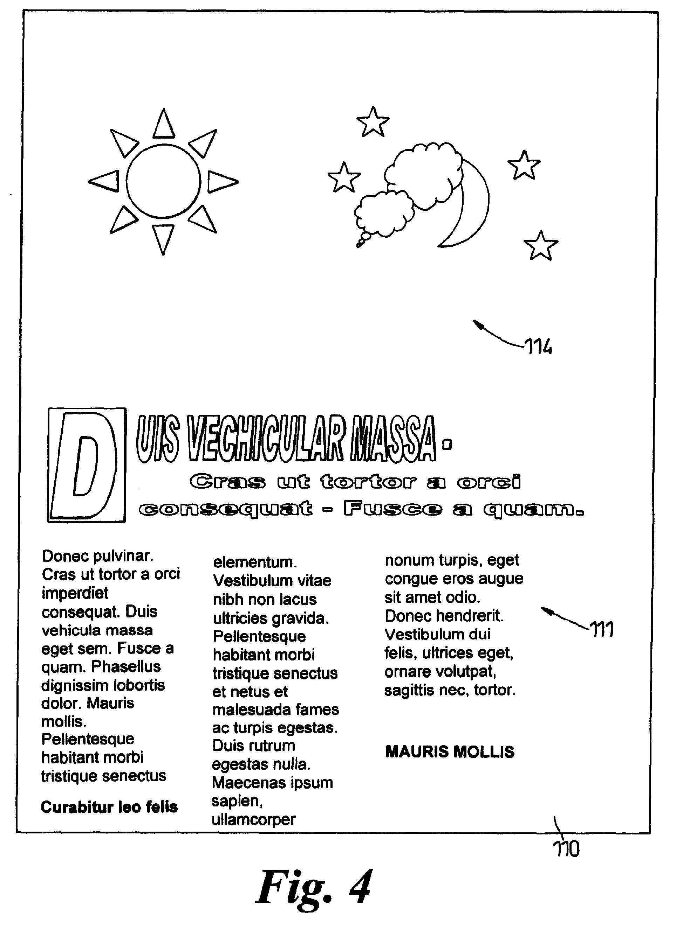

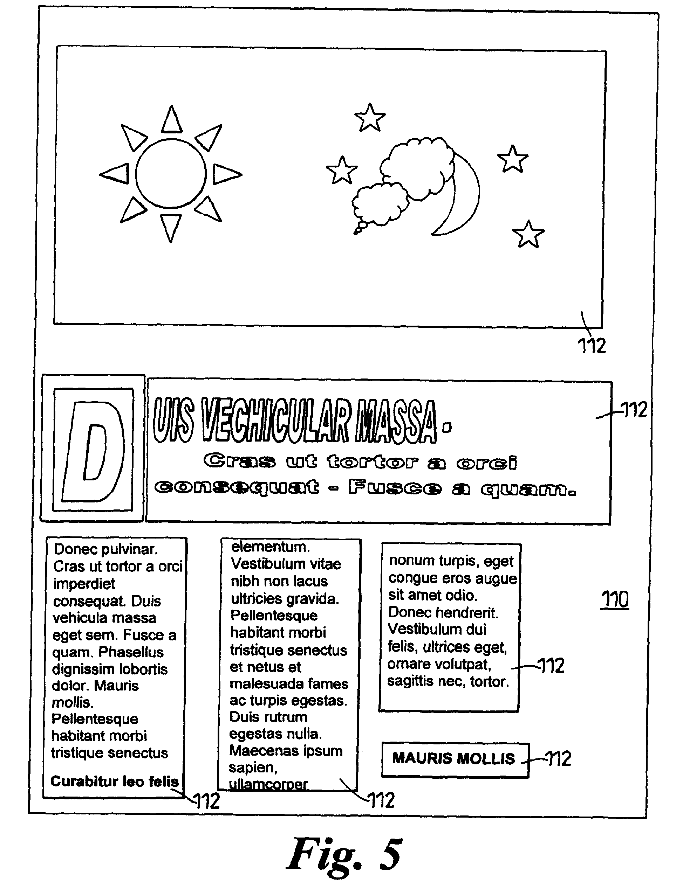

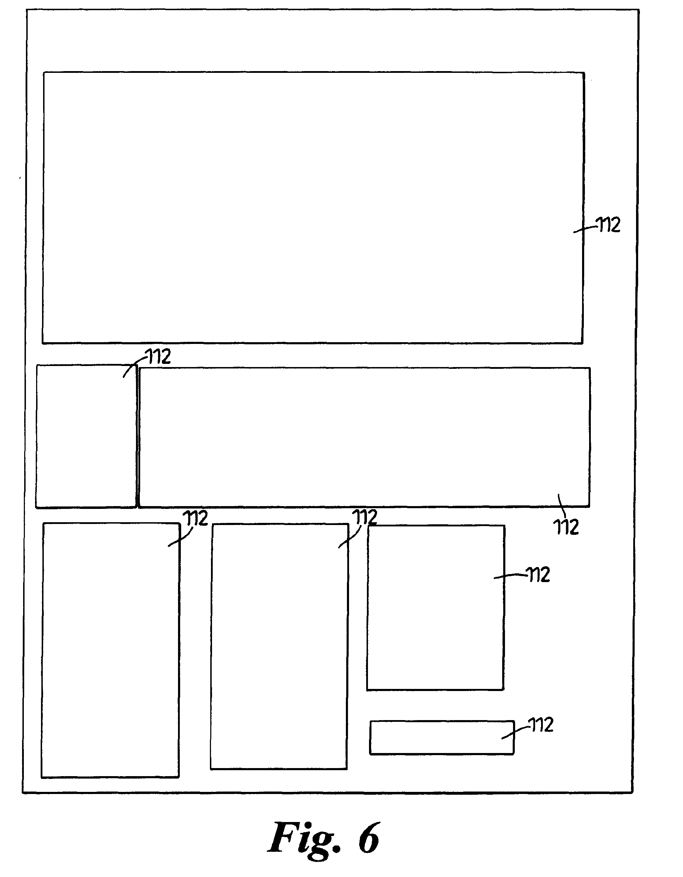

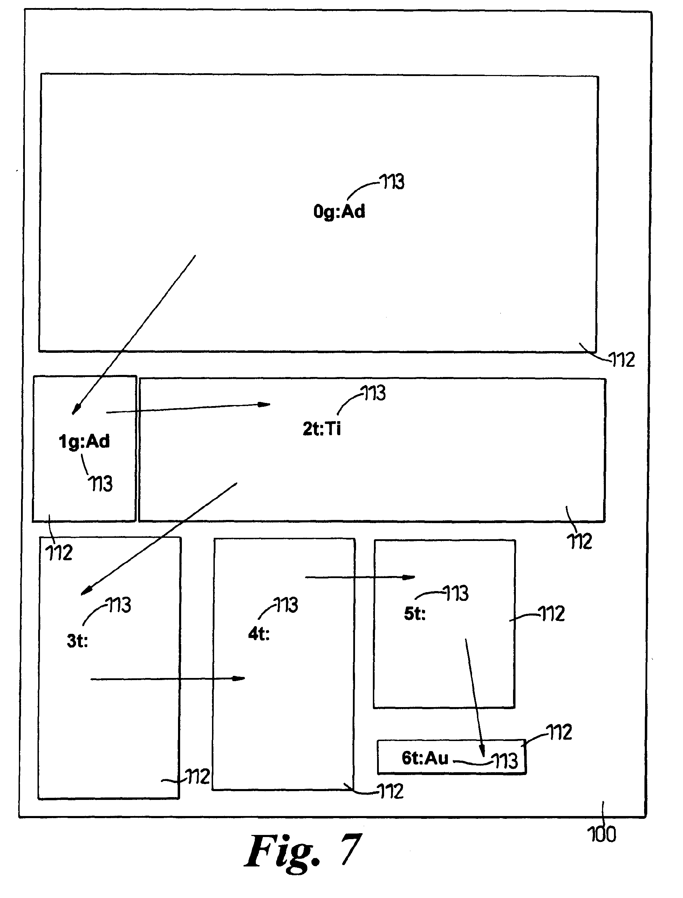

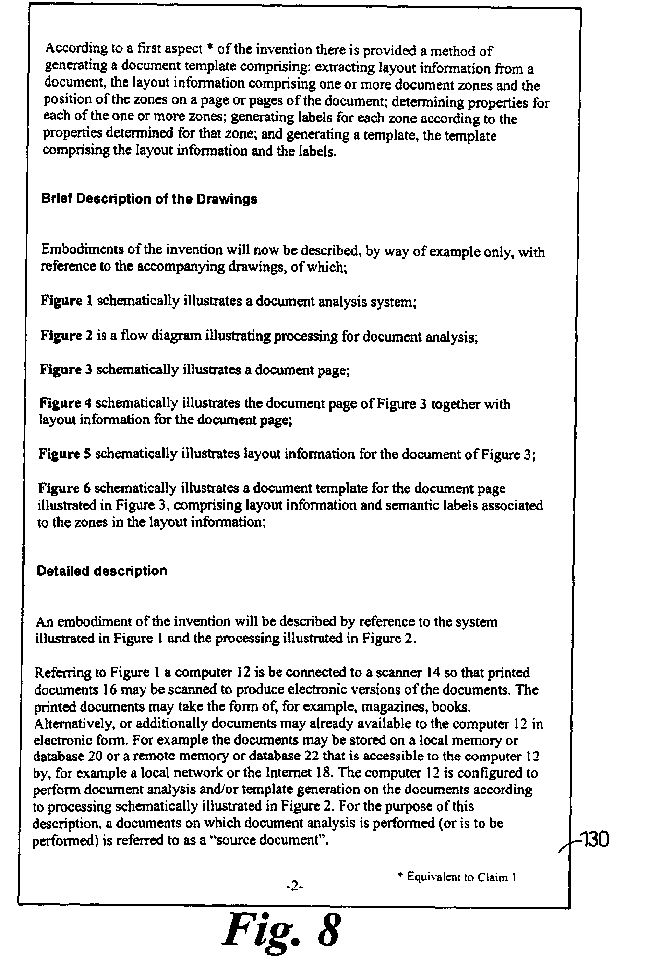

Referring to Figure 1 a document analysis system 1 comprises a processor 12 which is connected to a scanner 14 so that printed documents 16 may be scanned so that electronic versions of the documents are available to undergo processing by the processor 12. The processor 12 may be part of a computer such as, for example, a personal computer (PC) or a mainframe computer.

The printed documents may take the form of, for example, magazines, books or journals. However, it should be appreciated that the invention may be applied to many other forms of printed document. Alternatively, or additionally documents may already be available to the processor 12 in electronic form. For example the documents may be stored on a local memory 20 such as a computer disk, tape, CD ROM or other portable media or on an a hard drive, memory chip or other memory that is wired to the processor 12. Alternatively, the documents may be stored on a remote memory 22 that is accessible to the processor 12 by, for example, a local network or the Internet 18. The documents may stored on the memory in the form of a database, look-up table etc.

The processor 12 is configured to perform document analysis and/or template generation on the documents. For the purpose of this description, a document on which document analysis is performed (or is to be performed) may be referred to as a "source document".

Generally the processor 12 will be connected to a display 24, such as the VDU of a computer, to enable a user to view a document template 100 that has been generated by the processor 12. The processor 12 may also be connected to a printer 26 so that a hard copy of the template 100 can be produced.

In embodiments of the invention the template is populated using variable text and/or images taken from records in a memory so as to produce a document (which, for convenience, may be referred to as a "product document"). The memory may be the same memory 20, 22 as that which stores source documents or a different memory (not illustrated). The product document may be printed using a local printer 26 or the product document may be sent over a network such as the Internet 18, or otherwise transported (e.g. on a physical medium such as a computer disc, CD ROM etc.) to a remote printer (not illustrated). The remote printer may be an industrial printer that is able to produce large quantities of hard copies of the product document. Instead of, or as well as, being printed the product document may be viewed via the Internet 18 on the World Wide Web.

Figure 2 schematically illustrates some of the components (labelled (a) through to (f)) that form part of the processing that can be performed using the system of Figure 1. Generally components (a) to (f) are provided as software components that operate on the processor 12 or on one or more other processors in communication with the processor 12.

Layout analysis (a), of a source document may be provided as part of an Optical Character Recognition process (OCR) after the source documents have been scanned. Layout analysis, sometimes referred to as "geometric layout analysis", is a known technique that segments a page into a number of zones. A geometric page layout of a document is a specification of the geometry of the homogeneous zones (regions) of the document and the spatial relations of these zones. A zone is homogeneous if all its area is of one type such as text or figures and each text line lies entirely within some text zone of the layout. Methods of layout analysis are well known to the skilled person and some of these techniques are discussed by R. Haralick in the paper "Document image understanding: geometric and logical layout", IEEE conference on computer vision and document understanding, 1994.

The logical structure of the document is then determined using a document analysis and understanding system (b). The logical structure analysis of the document involves determining the type of the page (page classification) assigning functional labels to each zone of the page and determining the order in which the zones are read. Logical structure analysis is well known in the art and various techniques for such analysis are discussed in the Haralick paper referenced above. The document and understanding system (b) extracts information from a document using one or more tools, these may include: zone analysis, optical character recognition, intelligent character recognition, text combination, table of content identification, full page and column/row based advertisement detection, punctuation and font analyzers, detection of beginning and end of articles, photograph and image identification, etc.

The document analysis and understanding system (b) can be configured with a set of semantic definitions and rules (c) that are used to assign zones in a document page with specific meanings, or semantics, e.g. prices, products, page numbers, dates etc. The semantics of a zone can be thought of as the intention or reason for the existence of the zone.

Two different pages, A and B, can be considered as using the same template if semantics(Ai) = semantics(Bi) and position(Ai) = position(Bi)+K for all zones i in A and B, where K is a constant. K represents an offset of the positions of the zones on one page relative to the position of the zones on the other page (for example due to the pages having different margins). The content of the zones does not have to be the same and generally content(Ai) •content(Bi) for all zones i in A and B. Pages in a document can be constructed by using a template that is filled with different content for each zone. Usually, the use of templates make a number of pages in a document look alike, uniformly in their layout. This helps users reading and grasping content of the documents.

Once the document and analysis and understanding system (a) has generated a valid output, i.e. a template, there is a visualization component (d) that allows the user of the system 1 to verify that the template is of good quality. Optionally a format converter (e) transforms the output into an output that is suitable as a direct input into an existing VDP workflow.

A pattern allocation component (f) may be available and is described later in this specification under the heading "Digital Pen and Paper".

Referring to Figure 3, the processing that may be performed on the system 1 is described in more detail. At step 220 an electronic document is accessed and used as a source document. As described above the electronic document may have been provided from a database/memory of documents or may have been provided by scanning a printed document.

Figure 4 illustrates a page 110 of a document that has been scanned into, or otherwise accessed by, the computer 12. The document consists of blocks of text 111 and/or images 114.

The text 111 of the document page 110 is illustrated as *lorem ipsum,* that is, standard placeholder text. In reality the text would be normal text such as may be found in a conventional magazine, encyclopaedia, book etc. *Lorem ipsum* has been used so that the layout of the page may be illustrated without there being any focus on the content of the document.

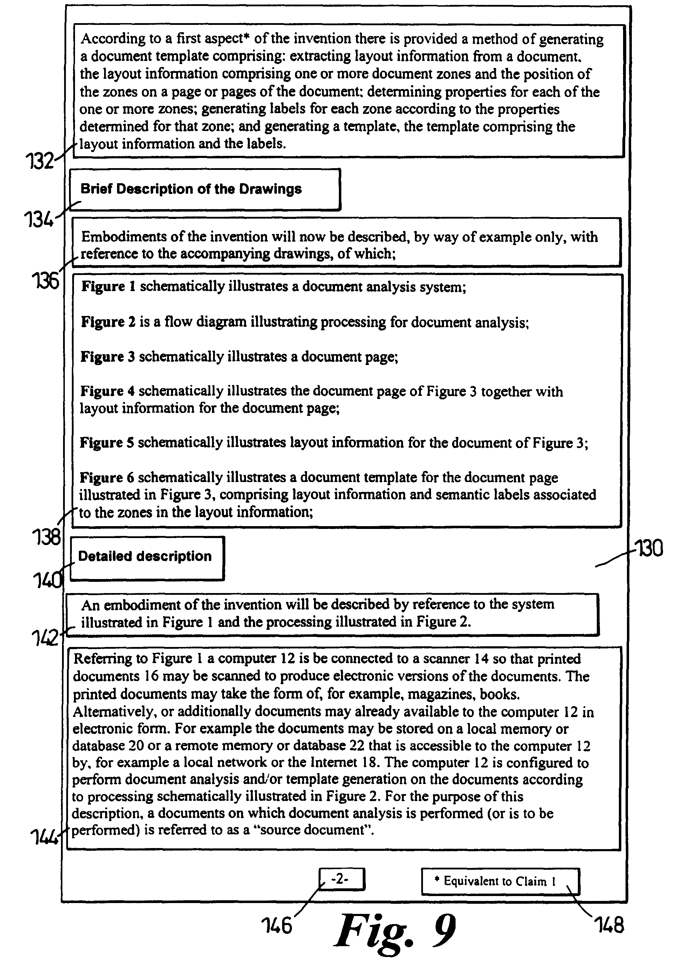

At step 224 the document is processed to extract layout information from the document. This processing involves delineating the page or pages of the documents into zones. Each zone contains text or graphics and is generally delineated by a rectangle, although other polygons could be used. One zone is normally distinguished from another zone by a margin that is devoid of any content. Figure 5 illustrates the document page 110 with the page content segmented into zones 112. Figure 6 illustrates the same the document page 110 as shown in Figure 5 showing the position of the zones 112 on the page but not the content of the page. It is the zones 112 and their position on the page that comprise the layout of the page 110.

At step 226 a zone is selected and at step 228 the properties of the zone are determined. The properties of a zone are determined so that the meaning of the zone, i.e. the zone semantics, can be derived. That is the type of the zone can be derived.

Semantics include the type of each page (such as cover, back, advertisement, table of content, regular article page, mixed article-advertisement page, etc), zone type (text, graphics, table, etc) zone semantics (title, author, article body, page number, header, footer, dates, prices etc) and zone relevance (article, text, advertisement, etc.). The zone relevance is indicates the usage of the zone while the zone semantics provides more information about the type of zone, e.g., where zone type can be text the semantics can indicate that the zone is a title, and the relevance can indicate that the zone is an article, or advertisement. In some contexts the relevance may be used to filter out some of the information, e.g., when users are only concerned about articles, legal documents such as patents, contracts or other sorts of documents.

In general, when considering the analysis of document pages that are sourced from the same document or document type, zones having the same semantics will have the same typographical characteristics. For example when considering document pages of a particular issue of a periodical then article titles may have the same font size and font style throughout the issue. Furthermore the font size/type of article titles is likely to be the same through a large number of issues, perhaps several years worth of issues, or more. There will only be a change in the font characteristics of a zone with particular semantics, e.g. an article title, between one issue and another when the publisher has decided to change the design of the periodical. Such a change normally only occurs infrequently, e.g. after, say, a few years or a few decades, or such a change may not have occurred at all in the history of the publication of that periodical.

When considering a particular publication such as, for example, a particular periodical, rules can be generated according to the properties that will be exhibited, or expected to be exhibited, by zones having particular semantics. For example when considering font size the various semantics may have the following ranking:

Titles => section headings => articles => footers ≅ headers ≅ footnotes ≅ page numbers.

It will be appreciated that different publications may have different rankings. For example, for the fictional newspaper "The Birmingham Times" footers may have a larger font size than "headers", whereas for the fictional newspaper "The Birmingham Herald" the converse may be true.

The semantics of a zone can also be determined from the position of the zone on the document page. For example it may be that page numbers appear at the centre and at the bottom of the page whereas footnotes appear at the bottom and left-hand side of the page.

At step 230 after the properties of a zone has been determined then a semantic label is given to that zone, the semantic label being generated in accordance to determined properties. For example when the processing recognises that a zone is at the centre and at the bottom of a page then it can be assigned the semantic label "page number".

Normally only one label is associated with a zone, however the association need not be exclusive. For example a zone with the semantics of DATE can also have the semantics of FOOTER if the zone always repeats at the very bottom of the page. Usually it is better to decide on the design of the analysis scheme so that only one semantic label is assigned to a zone. The analysis of a document can generate more than one semantic label for a zone however the usage/scenario/application can choose to make one of the labels prevail.

At step 240 the document can be classified according to the layout of the zones, i.e. the sizes, positions and semantics of the zones. Alternatively, or additionally a template can be generated that consists of the layout information and the semantic labels 113 but without the zones being populated with content. A graphical representation of such a template 100 is illustrated in Figure 7. For the example illustrated the letter "g" in a label indicates that a zone is a graphic whereas the letter "t" indicates that the zone is a text zone. Likewise the label "Ad" indicates that the zone is an advert and "Ti" indicates that the zone is a title. The graphical representation of the labels 113 is simply a tool to communicate to users of the system information that has been gathered on a page; hence both relevance and semantics can be shown.

The labels may have a number to indicate the reading order of the zones. The reading order is illustrated by means of arrows in Figure 7. The reading order may be incorporated as part of the template.

The system classifies a zone or labels a zone according to a set of rules but the classification or labelling may be merely provisional. That is an initial semantic label/classification is generated for a particular zone and then (as illustrated as step 260) the label/classification may be updated as more documents/document pages are analysed. This may be achieved by changing or refining particular rules for the generation of the semantic labels as more document pages are analysed and then retrospectively applying the rules to document pages that have been previously analysed. In this way a template can be updated as more documents/document pages are analysed.

As an example, a rule may be that all zones at the centre and at the bottom of a page are assigned the label "page number". However, after a number of documents, or a number of pages from a single document, have been analysed the system may recognise that a zone positioned at the top of a page may also be a page number. This may be recognised from the fact that the content of a zone at the top of a page is a number that is a number consecutive from the content of a "page number" zone of the previous page of the same document. The rules may then be altered so that a zone at the centre and at the bottom of the page or at the top of the page is given the semantic label "page number".

Whether a zone is considered to be at the top, bottom, centre, left, right or, indeed, of any other particular part of a page can be defined as part of the rules. For example the rule "at the centre and at the bottom of the page" will generally include more detailed parameters that have to be fulfilled in order for the rule to be satisfied. For example "bottom", for this rule, may mean between 5 and 10 mm from the bottom of the page and "at the centre" may mean within 10 mm of an imaginary centre line running vertically down the page. The terms left, right, top and bottom refer to a document page when the page is orientated so as to be read in the normal way.

Referring back to step 228, another property that can be used to determine the semantics of the zone is the amount of text present in the zone, for example the number of lines of text, the number of sentences or the number of words in a zone. For example, an "author" zone may have only a few words and is probably a single line of text whereas an "article body" zone will generally have several lines of text.

Zone semantics may be determined by recognising special symbols present in the text, for example page numbers may, for example, contain the delimiters "-", "/" or "_". The system may also be set up to recognise particular words for example a periodical may routinely have sections titled "News", "Politics", "Science", "Fashion" or whatever. There may be a lexicon containing words that commonly appear in section titles and if a word in a zone matches a word in the lexicon then the zone can be given a certain probability that it is a section heading. Generally there will be different lexicons (containing different entries) for respective different zone semantics. Each lexicon reflects the content expected to be present in the zones having a particular zone semantic. The lexicons can be considered to be libraries of known words or phrases, numbers etc.

The numerical value of the content of a zone can be used to determine zone semantics, for example for a monthly periodical a zone containing the issue number may have a number in the range 1 to 12.

Referring to Figure 8, a document page 130 is illustrated. The document page happens to be from a draft patent specification but for the purposes of this description the content of the page is unimportant apart from content that is used to determine the semantics of a zone.

Figure 9 illustrates the document page 130 segmented into a number of zones 132, 134, 136, 138, 140, 142, 144, 146, 148. The zones labelled 132, 136, 142 and 144 all contain text that has the same font, that is the text is in the font style "Times New Roman" and with the font size 12 point. The processing can, therefore, determine that all of these zones have the same semantic and that semantic is "Body Text". The zones 132, 136, 142 and 144 are given the semantic "Body text" following a rule such as 'If zone contains 12 pt, Times New Roman text then label zone as "Body Text"'. Similarly the zones labelled 134 and 140 may be determined to have the semantic label "Section Heading" from the fact that the zone contains text that has the font type "Frutiger 45 Light" and the font size 14 pt.

Rules may be set up to have several criteria, for example for section headings the criteria may be: Bold text; Frutiger 45 Light; 14 pt; left justified; and the zone separated from other zones from a space equivalent to or greater than two line spaces. A further criterion may be that a word contained in the zone should match a lexicon of words, in the current example a lexicon for section headings may include the words "description" and "drawings". It may not be necessary for a zone to satisfy all the criteria of a rule for a particular semantic for that zone to be assigned that semantic. For example a zone may be separated from other zones by two line spaces and be in bold text, according to the criteria, but the text in the zone may be in the font 12 pt Times New Roman instead of the font 14 pt Frutiger 45 Light. In this case the zone can still be recognised as being a "Section Heading" zone.

A probability can be assigned to a semantic label given to a zone according to how well the properties of the zone match the criteria for that semantic label.

The various criteria may be given different weightings according to their significance. For example, the criteria that a "Section Heading" zone should contain bold text may have a higher weighting than the criteria that the zone should contain text that has the font style Frutiger 45 Light. Such weightings may have been determined because the system may have already analysed, say, one hundred documents and for a high proportion of those documents, say 98 or 99 or all of them, the section headings where in bold text whereas a comparatively low proportion, say 60 of them, had section headings which where in text that has the font style Frutiger 45 Light. It will be appreciated that the weightings/rules can be set-up to be dynamic, that is the weightings/rules can be changed as more documents are analysed by the system. Such changes in the rules can be performed automatically, i.e. without human intervention.

Referring again to Figure 9, the zone labelled 138 can be assigned the semantic label "List of Figures" by recognising that the zone contains a section of text that starts with a first word that is in bold text and which finishes with a semi-colon. Alternatively, the recognition may be achieved by recognising that the zone contains a number of sections of text with each section being one to three lines of text and beginning with the word "Figure". It can be seen that the same semantic can be determined for a zone in many different ways, that is there may be many possible rules/criteria that could be used to make the determination.

The zone labelled 146 in Figure 9 may be determined to be a page number using a criterion such as 'the zone should be within the bottom centimetre of the page'. However, the document page 130 includes a further zone within the bottom centimetre of the page, labelled as zone 148, which is a footnote zone. There are several ways that these two zones 146, 148 can be distinguished so that the zones are given the correct semantics. In one example an additional criteria/rule may be added that is that 'page number zones should have a numeric value and include the special symbol "-" at either side of the number'. This will distinguish the page number zone 146 from the footnote zone 148.

The processing may initial be set up to have a rule with the only criteria being 'the zone should be within the bottom centimetre of the page'. When a document page, such as the page 130 illustrated, is processed according to such a rule an ambiguity can occur caused by two different zones 146, 148 being labelled with the same semantic, e.g. as a page number. Such an ambiguity can then trigger a modification to the rule. In the current example because the system has previously processed several, or many, pages the processing will have the information that zones previously defined as being page number zones have included the symbol "-" either side of a number. Therefore, the processing is able to adjust the rule for page numbers so that it has the new criteria 'should have a numeric value and include the special symbol "-" at either side of the number'. The new rule can be applied retrospectively so that the zone labelled as 148 in Figure 8 is no longer labelled as a page number zone.

In another example the zones labelled 146 and 148 can be distinguished because the zone 148 has the symbol "*". A rule may be set up to determine that a zone is a footnote zone if it contains a symbol that matches a lexicon that includes, by way of example, the symbols "*", "≠","°", "*f*" and "†" or superscript numbers. The rule for footnotes would then also need a further criteria such as 'the zone should be within the bottom centimetre of the page', or 'the text in the zone is in 10 pt text', or some other criteria to distinguish a footnote zone from the body text zone that the footnote is referring to since the body zone would necessarily include the same symbol as used in the footnote in order for the reference to the footnote to be made.

As more document pages are analysed then a profile for each zone type can be determined, the profile in effect being a list of properties for that zone. A rule for determining a particular zone semantic can be generated using one or more of these properties so that the semantic of any particular zone may be determined uniquely. As previously described, there may be various combinations of properties available to generate a rule that can achieve this.

It can now be appreciated that the rules can be refined as more document pages are analysed. Similarly, the profiles of various zones can be refined as more document pages are analysed. For example, after several pages have been analysed the profile of a footnote may include '75% of zones include symbols "",≠,"°", "*f*" and "†" ; 25% include superscript numbers; 90% of zones have 10pt text; and 100% are at the bottom of the page'. After many pages have been analysed (say a few hundred or a few thousand or even tens of thousands) the profile of a footnote may have changed to '5% of zones include symbols "≠","°", "*f*" and "†" ; 95% include superscript numbers; 98% of zones have 10pt text; and 99.9% are at the bottom of the page'.

The Appendix to this specification gives a list of rules that were used when the invention was applied to the analysis of back issues of Time™ magazine. Rules that are set up using terms like "may contain" translate into statistical relevance evaluations using thresholds.

Thresholds are used to weight the importance of rules, and also to give priorities among them. Thresholds may vary depending on the publication date of the document, the type of document, originator of the document, etc. For example, in historical document analysis, such as the one done when the current invention was applied to back-issues of Time magazines, it was realized that old documents published previous to 1940 where very strict on the use of fonts, and advertisement. Also, the number of different layouts per issue in older issues was smaller than found in later issues. Comparing the latest publications of a magazine with those published several years or several decades ago will generally indicate how the properties of the published document have changed. As an example, font sizes for the page numbers on old issues of Time where as large as the font size of the articles, this remained true until the 1950s. Thresholds are used to model document layout evolutions over the time, and across collections of documents. The thresholds can be tuned as more document pages of a particular publication are analysed.

Once the document analysis system has generated a valid output, in the form of a template or a document classification, a user may view the output on the display 24 (as illustrated in Figure 1). The user may simply verify that the template is of good quality or that the classification of the document is correct. Or the user may manually correct the automatically generated template. The system may learn from the manual corrections and automatically alter its rules for allocating semantic labels in response to a history of manual changes. The user may be able to change a rule manually/specifically as a rule change command, or a rule creation command.

Once templates have been generated they can be populated with various content, that is text and images stored in a database or memory, in order to create new or "product" documents. That is the output of the system 1 is used as input into a VDP workflow. The output may be converted to be in a format more suitable for the VDP workflow, this may involve, for example changing the output from one XML format to another XML format. The system 1 may also be used for generating marked PDF templates. A PDF template is a special case of template used for PDF documents, where the template contains elements that repeat over the pages and are only described once. A marked PDF template refers to VDP workflows based on documents using PDF as their format. The marking allows PDF parsers to replace elements in the document with other ones that will be variable but will represent the element that is marked, for example CUSTOMER-NAME, DATE, etc.

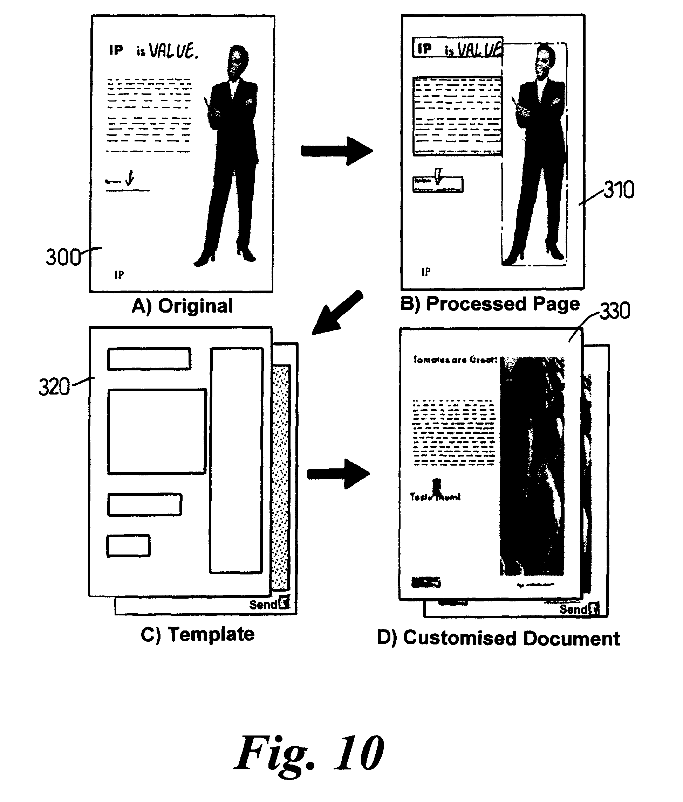

Figure 10 illustrates an example of a use of an embodiment of the invention in VDP. An original source document 300 is produced as an image by scanning a printed document. The document analysis and understanding system (b) (illustrated in Figure 2) processes the original document 300 to produce a processed page 310 containing information about the document zones and the zone semantics. A template 320 is then produced from the processed page 310 by retaining the zone information and the semantic information but without the content of the page. The template page 320 can then be used to generate another document 330 which has the same layout and semantics but which has different content.

In an embodiment of the invention templates could be used to automatically classify documents based on the layout and semantic labels derived from the documents. Once a set of templates have been generated all the documents that share a common layout, that is match a particular template, can be categorised together. This would be very useful in the field of form automation, as all forms of the same type would share a common layout and this method would allow them to be automatically classified.

In an embodiment of the invention a searchable library of templates is produced from the analysis of a corpus of documents. The library can be enlarged as additional templates are generated by the analysis of further documents.

In a similar way a searchable library of documents can be produced. The documents can be classified within the library according to the layout information and semantic labels, that is the templates, produced from the analysis of those documents. The library may be searched to find documents that have a certain template. Portions of the template may also be used to search for documents. For example a user may wish to search for document pages that comprise an advertisement zone that is a column on the right-hand-most side of the page, or whatever.

### Digital Pen and Paper

Embodiments of the invention have utility when used with digital pen and paper systems. It is convenient to discuss the invention by referring to the prior art Anoto digital pen and paper system, but it will be appreciated that the invention is not restricted to use with any proprietary system.

The prior art Anoto system is described on their website www.anotofunctionality.com. However, since the content of websites can change with time it is to be made clear that the prior art admitted is that which was published on their website no later than the day before the priority date of this patent application. It is also appropriate to include in this application itself a brief review of the Anoto system.

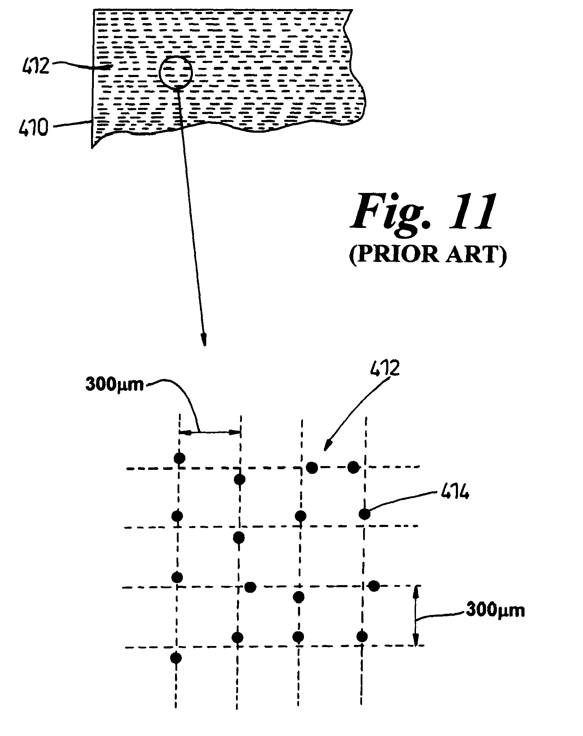

Figure 11 shows schematically an A4 sheet 410 of Anoto digital paper. This comprises a part of a very large non-repeating pattern 412 of dots 414. The overall pattern is large enough to cover 60,000,000 square kilometres. The pattern 412 is made from the dots which are printed using infra-red absorbing black ink. The dots 414 are spaced by a nominal spacing of 300µm, but are offset from their nominal position a little way (about 50µm), for example north, south, east or west, from the nominal position.

A cell may be defined by a 4x4 or 6x6 array of dots. Each cell has its dots at a unique combination of positions in the pattern space so as to locate the cell in the pattern space. The dot pattern of an area of the dot pattern space codes for the position of that area in the overall dot pattern space.

The sheet 412 has a pale grey appearance due to the dots 414.

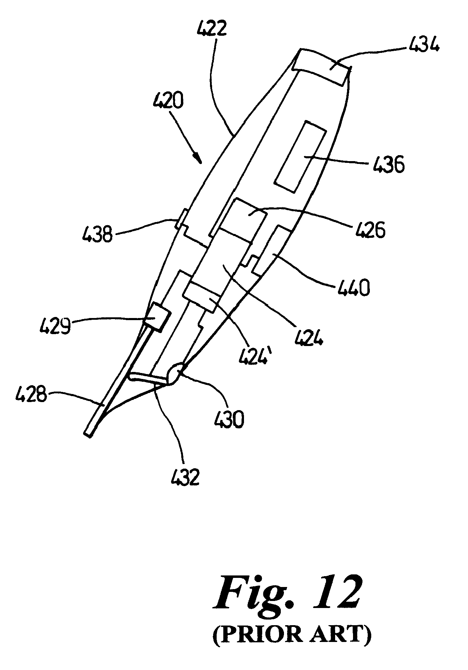

Figure 12 schematically shows a digital pen 420 adapted to write human readable ink in non-machine-readable IR transparent ink and to read a position dot pattern in infra-red absorbing ink. The pen 420 has a housing 422, a processor 424 with access to a memory 426, a removable and replaceable ink nib and cartridge unit 428, a pressure sensor 429 adapted to be able to identify when the nib is pressed against a document, an infra-red LED emitter 430 adapted to emit infra-red light, an infra-red sensitive camera 432 (e.g. a CCD or CMOS sensor), a wireless telecommunications transceiver 434, and a removable and replaceable battery 436. The pen 420 also has a visible wavelength warning light 438 (e.g. a red light) positioned so that a user of the pen can see it when they are using the pen, and a vibration unit 440 adapted to vibrate and to cause a user to be able to feel vibrations through the pen. The pen 420 includes a clock 424' adapted to associate a time value with position data acquired by the pen.

Such a pen exists today and is available from Anoto as the Logitech IO™ pen.

The pen, when in use writing on a page/marking a page, sees a 6x6 array of dots 414 and its processor 424 establishes its position in the dot pattern from that image. In use the LED 430 emits infra-red light which is reflected by the page 412 and detected by the camera 432. The dots 414 absorb the infra-red and so are detectable against the generally reflective background. Of course, the ink of the dots might be especially reflective in order to distinguish them (and the paper less reflective), or they may fluoresce at a different wavelength from the radiation that excites them, the fluorescent wavelength being detected. The dots 414 are detectable against the background page.

The processor 24 processes data acquired by the camera 432 and the transceiver 434 communicates processed information from the processor 424 to a remote complementary transceiver (e.g. to a receiver linked to a PC). Typically that information will include information related to where in the dot pattern the pen is, or has been, and its pattern of movement, and the time at which the tip of the pen was at any particular position: position values are time-stamped.

When using the document analysis system illustrated in Figure 2 a pattern space can be assigned to each zone of the document. For example, if the original document is a form and the «name» field is detected in a zone, then the pattern space assigned to that field will be tagged to this zone. That information will be used when producing the PDF template containing the digital paper pattern that is associated to that pattern space.

An application for embodiments of the invention is to enable autonomous semantic rich document template generation. This enables a seamless generation of document templates at a large scale in a manner that is efficient in cost, and time, and manpower. Templates generated by this system are most suitable - but not limited to - workflows and printing systems dealing with variable data printing and form automation.

Template generation is made into an autonomous component in the workflow. In addition, use of this invention enables a new generation of VDP tools for template management to become autonomous too, e.g. to perform dynamic template customization and management.

Scenarios involving forms automation could benefit from using this invention when a large number of paper forms need to be processed, for example to leverage from legacy material. The templates that are output of the system would then be electronic forms. This invention has applications when "legacy form import" processes have to be done in a cost, time, and manpower effective manner. In addition, it could be combined with digital pen and paper technologies so that the generated templates contain pattern information.

Another usage of this invention would be in the field of automatic document classification based on layout. Once the templates have been generated it is possible to assemble all documents that share a common layout, i.e.,

template, in the same category. This is very useful in the field of form automation, as all forms would share a common layout, and this method would enable automatic classification of them.

The outcome from a system in accordance with some embodiments of this invention is a file or set of files that are suitable as templates for variable data printing in document processing workflows and engines; or as digital forms that are suitable for digital pen and paper type of workflows.

A differentiation over known systems that embodiments of the invention provide is that semantic information, in addition to the "normal" layout information, is automatically added to the template. Semantics include (as mentioned earlier) type of each page (cover, back, advertisement, table of content, regular article page, mixed article-advertisement page, etc.), zone type (text, graphics, table, etc), zone semantics (title, author, article body, page number, header, footer, etc.) zone relevance (article, text, etc,). This list is non-exhaustive. Customization of page semantics can also be enabled allowing for example use in vertical domains such as banking finances, newsletters, distribution chains, insurance, etc.

It will be appreciated that once a template has been created automatically it may be displayed, probably/ optionally along with an image of the original document, on a display for checking by a checker person. They verify that the template is of good quality. In a content processing system, it is known to refer to this as "ground truthing" and there will be manual correction tools. In addition, this tool would also allow for manually assigning a valid meaning to document zones, as current systems and methods do. However, in at least some embodiments of the invention, this step takes place only as a final validation step, instead of being the main method used. Hence some embodiments of the invention allow for high scalability of the solution when having to produce large volumes of templates.

A step within some embodiment of the invention is the use of a format converter component that transforms the output of the system so that it is suitable as direct input into existing VDP workflows. Typically it will change the XML format that is output of the document analysis and understanding system into another XML format. XML-based formats such as PPML can be used, and the system allows also for generating marked PDF templates.

When using the system in a workflow for "digital dot-pattern" forms automation (e.g. using Anoto™ type position determining pattern) there may be another component that assigns with pattern space each zone of the document. For example, if the original document is a form and the "name" field is detected in a zone, the pattern space assigned to that field may be tagged to this zone. That information may then be used when producing the PDF template containing the digital paper pattern that is associated with that pattern space.

Embodiments of the invention allow for a highly scalable path in the generation of document templates for variable data printing. As variable data printing techniques in commercial applications keep growing in importance, being able to generate variable data printing templates for a large scale production - and in a cost, and time, and manpower, efficient manner may be very useful.

The invention has application in VDP workflows for commercial printing (e.g. printing magazines, books, newspapers, and the production of webpages). Making the template generation tasks become autonomous is a good advantage over prior art systems.

When this invention was applied, in confidence, to a large number of pages, e.g. more than 500K pages for 80 years of a weekly magazine, a corpus of page templates was generated. This template repository can then be used to generate new content. In this way, the collection will contain templates for advertisements which can be used, for example, to generate new advertisements. In addition the rich collection of article templates can be used to generate new articles.

There now follows an appendix which discusses, for a specific embodiment implementing aspect of the invention, some semantic labels and some rules used to determine whether to allocate a specific semantic label to a zone of a document. Terms used in the appendix like "usually", "most probably", and "may" reflect lower confidence weightings placed on some rules. Sometimes the system has to select a best match semantic label, rather then a perfect match - some "rules" may be broken/not followed if other rules take precedence in a hierarchy of precedence/importance. The embodiment to which the rules of the appendix apply is an embodiment used in creating document templates for a back catalogue of the last 80 years' supply of a weekly or monthly published magazine.

# APPENDIX

**semantics:**

for all of them:

    - all zones having the same semantics in a page have the same typographic characteristics.

    - same semantics may share same characteristics (position, typography, color, etc) among all pages of a single issue.

    - usually font size is bigger for titles >= sections >= article zones >= footers ~= headers ~= footnotes ~= page numbers


- author:

    - may have few words in a sentence.

    - most probably 1 liner.

    - may contain the word "by" or "written by"

    - most probably contains words not-found in dictionary but found in manifest zone.

- body

    - in article zones

    - all zones have same typographic characteristics for the same article.

    - there is a title somewhere leading the article for which these zones are the body.

- header

    - on the upper part of the page (threshold).

    - on top of body article zones.

    - not a title, section zone, article nor page number.

    - may contain reserved words as "time magazine" or "advertisement page"

- footer

- on the bottom part of the page (threshold).

- below body article zones.

- not a title, section zone, article, nor page number.

- may contain reserved words as "time magazine" or "advertisement page"

- footnote

    - usually placed as footer.

    - contains a leading asterisk ("*") or number.

    - font size smaller than article font size.

- page Number

    - contains numeric value.

    - may contain the word "page" or "p." or hyphens "-" or other delimiters.

    - does not exceed the number of pages in an issue.

    - usually placed as footer or header.

    - usually in the same position for all pages in an issue.

    - usually in smaller font sizes than body article zones (except for old issues < 1930).

- section

    - usually 1 liner.

    - leads article zones.

    - may lead a subsection.

    - may contain words found in the table of contents page and zones.

    - may be found in a dictionary of sections that is time dependent, e.g., section "politics" or "national", "nation", "science", "art", "fashion" (since 1970)

- subsection

    - usually 1 liner.

    - leads article zones.

    - may contain words found in the table of contents page and zones.

    - may be found in a dictionary of subsections that is time dependent,

e.g., subsection "URSS", or subsection "Iraq" has its own meaning around 2004.

- title
    - like a section but not found in section dictionary.
    - stronger changes to appear in TOC pages and zones.
- subtitle
    - like a subsection but not found in subsection dictionary.
    - stronger changes to appear in TOC pages and zones.
- caption
    - usually not more than few lines (time dependent threshold).
    - close to a picture, but not within the picture.
    - usually underneath (specially for issues older than 1970).
    - may be in bold type, in any case in a different cluster than any other relevances and semantics.
    - may be aligned (centered or left) to a picture rather than a column.
    - normally not at the bottom or upper part of the page.
- margin
    - out from some time-dependent threshold areas of the page for bottom, upper, left and right.
    - margins are not subsections, sections, titles, subtitles, headers, footers, footnotes, page numbers.
- date
    - usually a margin, footer or header in terms of position and typographic characteristics.
    - may contain numeric value representing days, months or years.
    - may contain alphanumeric values representing days, months, years, or weekdays.
    - usually constant along the issue and among issues, although it can change over decades.
    - the correspondence to the time in which issue was published can help finding this item.

- volume

　- may be found in first (cover) page.

　- usually a margin, footer or header in terms of position and typographic characteristics.

　- use of date can help determine volume number.

　- usually changes with year.

**relevance:**

- article

- other

- advertisement

- insert

- TOC

- letters2editor

- manifest

- reprocess

**Claims**

1. A computer-implemented method of generating a document template comprising: analysing a document (16) by: extracting layout information from the document (6), the layout information comprising one or more document zones and the position of the zones (112) on a page or pages of the document; determining properties of each of the one or more zones (112); and generating a semantic label (113) for each zone (112) according to the properties determined for that zone (112); and generating a template (100), the template comprising the layout information and the semantic labels (112).

2. The method of claim 1 comprising matching the generated template (100) with a plurality of predefined templates and classifying the document according to which of predefined templates best matches the document template (100).

3. The method of claim 1 comprising populating the zones (112) of the template with text and/or images from a memory (20, 22) of text and/or images to generate a product document.

4. The method of claim 3, wherein the product document is at least one of:

   a printed document; a web page.

5. The method of any previous claim wherein the properties determined for the one or more zones (112) comprises at least one of:

   (i) the presence of text;
   (ii) the presence of content that matches content of a lexicon;
   (iii) font type;

(iv) font style;
(v) font size;
(vi) the amount of text;
(vii) the presence of graphics;
(viii) zone size;
(ix) position of zone in relation to the page;
(x) proximity of zone to other zones; or
(xi) any combination of (i) to (x).

6.  The method of claim 5, part (ii), wherein the lexicon contains at least one of words, symbols and alphanumeric characters.

7.  The method of any previous claim, wherein the semantic label (113) assigned to a zone is determined by a rule that specifies one or more criteria for the properties of the zone.

8.  The method of claim 7, wherein said analysing is applied to a plurality of documents (16) to produce a plurality of document templates (100) and one or more of the rules are changed to produce updated rules as more documents (16) undergo said analysing.

9.  The method of claim 8, wherein one or more of the semantic labels (113) of a previously generated document template (100) are replaced, or augmented, with different semantic labels (113) generated according to the updated rules so as to produce an updated template

10. The method of any previous claim wherein a label (113) for a zone denotes that the zone (112) has a semantic chosen from the group: a title, a sub-title, a header, a footer, page number, body text, and caption.

11. The method of any previous claim wherein the document is a printed document and the method comprising scanning the document to obtain an electronic version of the document so that layout information may be extracted from the document.

12. The method of any previous claim further comprising displaying to a user a computer-generated putative document template with computer-allocated semantic labels to zones, and the user either accepting the putative template as a completed template or making changes to the template so as to modify it, and then accepting the modified template as the finished template product, the accepted templates or modified templates being stored in computer memory.

13. The method of any previous claim comprising storing the generated template in a computer memory together with previously generated templates to form a library of templates.

14. The method of any previous claim comprising storing the document in a computer memory, together with other documents that have undergone said analysing, to forming a library of documents that is searchable using at least a portion of a template.

15. A system (1) for generating a document template (100) comprising a processor (120) adapted to:

    extract layout information from an electronic document, the layout information comprising one or more document zones (112) and the position of the zones on a page or pages of the document (100);
    determine properties of each of the one or more zones (112);
    generate a semantic label (113) for each zone (112) according to the properties determined for that zone (112); and
    generate a document template (100), the document template (100) comprising the layout information and the semantic labels (112).

16. The system of claim 15, comprising a scanner (14) for scanning a printed document to obtain the electronic document (100).

17. The system of claim 15 or claim 16, comprising a display (24) for displaying the template (100).

18. The system of any one of claims 15 to 17, comprising a memory (20,22) containing text and/or images and the system being configured such that the processor can cause the template (100) to be populated by text and/or images from the memory (20,22) to generate a product document from the template.

19. The system of claim 18, comprising a printer (26) for printing the product document.

20. A computer program product encoded with software which run on a processor (12), is adapted to: extract layout information from an electronic document, the layout information comprising one or more document zones (112) and the position of the zones on a page or pages of the document; determine properties for each of the one or more zones (112); generate semantic labels (113) for each zone (112) according to the properties determined for that zone (113); and generate a template (100), the template (100) comprising the layout information and the semantic labels (113).

*Fig. 1*

# Fig. 2

Complex printed documents

Electronic documents

Final Review (d)

Scanning/ Layout Analysis (a)

Document Analysis and Understanding System (b)

Format Converter XML and PDF (e)

Pattern Allocation (f)

Semantic Definitions and Rules (c)

Templates

Access source document —220

Extract document layout from source
document to obtain one or more zones —224

Select a zone    226

Determine zone properties, eg:
- presence of images
- presence of text
- typography - font size, font type/style, colour etc.
- amount of text (number of lines, words, sentences etc)
- special symbols in content (eg. hyphens, asterix)
- specific content/text
- content correlates with a dictionary/lexicon
- zone contains word/words in table of content zones
- numeric values of content
- position of zone, eg. proximity to other zones or page borders
- zone size
—228

Label zone with semantic label according to
determined properties —230

Generate template comprising layout information and labels/
Classify document according to layout information and labels —240

Update semantic labels, if necessary, according to
properties determined for other zones —250

*Fig. 3*

*Fig. 4*

112

112

D

UIS VECHICULAR MASSA.

Cras ut tortor a orci consequat - Fusce a quam.

Donec pulvinar. Cras ut tortor a orci imperdiet consequat. Duis vehicula massa eget sem. Fusce a quam. Phasellus dignissim lobortis dolor. Mauris mollis. Pellentesque habitant morbi tristique senectus

**Curabitur leo felis**

112

elementum. Vestibulum vitae nibh non lacus ultricies gravida. Pellentesque habitant morbi tristique senectus et netus et malesuada fames ac turpis egestas. Duis rutrum egestas nulla. Maecenas ipsum sapien, ullamcorper

112

nonum turpis, eget congue eros augue sit amet odio. Donec hendrerit. Vestibulum dui felis, ultrices eget, ornare volutpat, sagittis nec, tortor.

112

110

**MAURIS MOLLIS** 112

## Fig. 5

*Fig. 6*

**Fig. 7**

According to a first aspect * of the invention there is provided a method of generating a document template comprising: extracting layout information from a document, the layout information comprising one or more document zones and the position of the zones on a page or pages of the document; determining properties for each of the one or more zones; generating labels for each zone according to the properties determined for that zone; and generating a template, the template comprising the layout information and the labels.

## Brief Description of the Drawings

Embodiments of the invention will now be described, by way of example only, with reference to the accompanying drawings, of which;

**Figure 1** schematically illustrates a document analysis system;

**Figure 2** is a flow diagram illustrating processing for document analysis;

**Figure 3** schematically illustrates a document page;

**Figure 4** schematically illustrates the document page of Figure 3 together with layout information for the document page;

**Figure 5** schematically illustrates layout information for the document of Figure 3;

**Figure 6** schematically illustrates a document template for the document page illustrated in Figure 3, comprising layout information and semantic labels associated to the zones in the layout information;

## Detailed description

An embodiment of the invention will be described by reference to the system illustrated in Figure 1 and the processing illustrated in Figure 2.

Referring to Figure 1 a computer 12 is be connected to a scanner 14 so that printed documents 16 may be scanned to produce electronic versions of the documents. The printed documents may take the form of, for example, magazines, books. Alternatively, or additionally documents may already available to the computer 12 in electronic form. For example the documents may be stored on a local memory or database 20 or a remote memory or database 22 that is accessible to the computer 12 by, for example a local network or the Internet 18. The computer 12 is configured to perform document analysis and/or template generation on the documents according to processing schematically illustrated in Figure 2. For the purpose of this description, a documents on which document analysis is performed (or is to be performed) is referred to as a "source document".

/—130

-2-

* Equivalent to Claim 1

*Fig. 8*

According to a first aspect* of the invention there is provided a method of generating a document template comprising: extracting layout information from a document, the layout information comprising one or more document zones and the position of the zones on a page or pages of the document; determining properties for each of the one or more zones; generating labels for each zone according to the properties determined for that zone; and generating a template, the template comprising the layout information and the labels.

**Brief Description of the Drawings**

Embodiments of the invention will now be described, by way of example only, with reference to the accompanying drawings, of which;

**Figure 1** schematically illustrates a document analysis system;

**Figure 2** is a flow diagram illustrating processing for document analysis;

**Figure 3** schematically illustrates a document page;

**Figure 4** schematically illustrates the document page of Figure 3 together with layout information for the document page;

**Figure 5** schematically illustrates layout information for the document of Figure 3;

**Figure 6** schematically illustrates a document template for the document page illustrated in Figure 3, comprising layout information and semantic labels associated to the zones in the layout information;

**Detailed description**

An embodiment of the invention will be described by reference to the system illustrated in Figure 1 and the processing illustrated in Figure 2.

Referring to Figure 1 a computer 12 is be connected to a scanner 14 so that printed documents 16 may be scanned to produce electronic versions of the documents. The printed documents may take the form of, for example, magazines, books. Alternatively, or additionally documents may already available to the computer 12 in electronic form. For example the documents may be stored on a local memory or database 20 or a remote memory or database 22 that is accessible to the computer 12 by, for example a local network or the Internet 18. The computer 12 is configured to perform document analysis and/or template generation on the documents according to processing schematically illustrated in Figure 2. For the purpose of this description, a documents on which document analysis is performed (or is to be performed) is referred to as a "source document".

-2-

* Equivalent to Claim 1

*Fig. 9*

A) Original

B) Processed Page

C) Template

D) Customised Document

*Fig. 10*

*Fig. 11*
(PRIOR ART)

**Fig. 12**
(PRIOR ART)

European Patent Office

**EUROPEAN SEARCH REPORT**

Application Number

EP 05 10 6902

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SONG MAO ET AL: "A dynamic feature generation system for automated metadata extraction in preservation of digital materials" PROCEEDINGS OF THE FIRST INTERNATIONAL WORKSHOP ON DOCUMENT IMAGE ANALYSIS FOR LIBRARIES, 23 January 2004 (2004-01-23), - 24 January 2004 (2004-01-24) pages 225-232, XP010681131 PALO ALTO, CA, USA ISBN: 0-7695-2088-X * abstract * * section 2 ** figures 1-4 *<br>----- | 1-20 | G06F17/21 G06F17/24 |
| X | KIM J ET AL: "Automated Labeling for Biomedical Journals published in Foreign Languages" PROCEEDINGS OF THE 8TH WORLD MULTICONFERENCE ON SYSTEMICS, CYBERNETICS AND INFORMATICS, 18 July 2004 (2004-07-18), XP002355492 Orlando, Florida, USA Retrieved from the Internet: URL:http://archive.nlm.nih.gov/pubs/biblio /biblio.php> [retrieved on 2005-11-23] * the whole document *<br>----- | 1-20 | TECHNICAL FIELDS SEARCHED (IPC)<br><br>G06F |
| X | KIM J ET AL: "Automated Labeling in Document Images" PROCEEDINGS OF THE SPIE - THE INTERNATIONAL SOCIETY FOR OPTICAL ENGINEERING, [Online] vol. 4307, 2001, XP002355493 USA Retrieved from the Internet: URL:http://archive.nlm.nih.gov/pubs/biblio /biblio.php> [retrieved on 2005-11-23] * the whole document *<br>----- | 1-20 | |

-/--

The present search report has been drawn up for all claims

| Place of search | Date of completion of the search | Examiner |
|---|---|---|
| Berlin | 23 November 2005 | Stauch, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................................
& : member of the same patent family, corresponding
    document

EPO FORM 1503 03.82 (P04C01)

**European Patent Office**

## EUROPEAN SEARCH REPORT

Application Number

EP 05 10 6902

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LE D X ET AL: "Automated labeling of zones from scanned documents" PROC. 1999 SYMPOSIUM ON DOCUMENT IMAGE UNDERSTANDING TECHNOLOGY, [Online] April 1999 (1999-04), XP002355494 Retrieved from the Internet: URL:http://archive.nlm.nih.gov/pubs/biblio /biblio.php> [retrieved on 2005-11-22] * abstract * * section 2 * * section 3 * * section 4 * ----- | 1-20 | |
| A | LE DANIEL X ET AL: "Page Layout Classification Technique for Biomedical Documents" PROCEEDINGS OF THE 4TH WORLD MULTICONFERENCE ON SYSTEMICS, CYBERNETICS AND INFORMATICS, 23 July 2000 (2000-07-23), XP002355495 Orlando, Florida, USA Retrieved from the Internet: URL:http://archive.nlm.nih.gov/pubs/biblio /biblio.php> [retrieved on 2005-11-22] * abstract * * section 1 * ----- -/-- | 2,3,13, 14,18,19 | TECHNICAL FIELDS SEARCHED (IPC) |

The present search report has been drawn up for all claims

| Place of search | Date of completion of the search | Examiner |
|---|---|---|
| Berlin | 23 November 2005 | Stauch, M |

EPO FORM 1503 03.82 (P04C01)

European Patent
Office

**EUROPEAN SEARCH REPORT**

Application Number

EP 05 10 6902

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SONG MAO ET AL: "Document structure analysis algorithms: a literature survey" PROCEEDINGS OF THE SPIE - THE INTERNATIONAL SOCIETY FOR OPTICAL ENGINEERING, [Online] vol. 5010, January 2003 (2003-01), pages 197-207, XP002355496 USA ISSN: 0277-786X Retrieved from the Internet: URL:http://archive.nlm.nih.gov/pubs/biblio /biblio.php> [retrieved on 2005-11-23] * section 1 * * abstract * * section 3 * * section 5 * | 2,3,13, 14,18,19 | |
| A | PEARSON G ET AL: "Manual verification and correction of automatically labeled zones: User Interface Considerations" PROC. 1999 SYMPOSIUM ON DOCUMENT IMAGE UNDERSTANDING TECHNOLOGY, April 1999 (1999-04), XP002355497 Retrieved from the Internet: URL:http://archive.nlm.nih.gov/pubs/biblio /biblio.php> [retrieved on 2005-11-22] * abstract * * section 2.3 * * section 2.5 * * section 4.2 * * section 5.1 * | 12 | TECHNICAL FIELDS SEARCHED (IPC) |
| A | US 2001/042083 A1 (SAITO TAKASHI ET AL) 15 November 2001 (2001-11-15) * abstract; figures 1,2 * * paragraph [0006] - paragraph [0009] * | 13,14 | |

-/--

The present search report has been drawn up for all claims

| Place of search | Date of completion of the search | Examiner |
|---|---|---|
| Berlin | 23 November 2005 | Stauch, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   ...........................................................................
& : member of the same patent family, corresponding
   document

| | European Patent Office | **EUROPEAN SEARCH REPORT** | Application Number |
|---|---|---|---|
| | | | EP 05 10 6902 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HIGASHINO J ET AL: "A KNOWLEDGE-BASED SEGMENTATION METHOD FOR DOCUMENT UNDERSTANDING" PROCEEDINGS OF THE INTERNATIONAL CONFERENCE ON PATTERN RECOGNITION, vol. 8, 27 October 1986 (1986-10-27), - 31 October 1986 (1986-10-31) pages 745-748, XP000605311 Paris, France * abstract * ----- | 1,15,20 | |
| | | | **TECHNICAL FIELDS SEARCHED (IPC)** |

The present search report has been drawn up for all claims

| Place of search | Date of completion of the search | Examiner |
|---|---|---|
| Berlin | 23 November 2005 | Stauch, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    .........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 10 6902

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2005

| Patent document cited in search report | Publication date | Patent family member(s) | Publication date |
|---|---|---|---|
| US 2001042083 A1 | 15-11-2001 | NONE | |